(19) Europäisches Patentamt
European Patent Office
Office européen des brevets

(11) Publication number: **0 332 189 A2**

(12) **EUROPEAN PATENT APPLICATION**

(21) Application number: 89104196.4

(22) Date of filing: 09.03.89

(51) Int. Cl.[4]: H01G 4/18 , C08G 75/14 , C08L 81/04

(30) Priority: 11.03.88 JP 57849/88

(43) Date of publication of application: 13.09.89 Bulletin 89/37

(84) Designated Contracting States: DE FR GB

(71) Applicant: DIAFOIL COMPANY, LIMITED
5-2, Marunouchi 2-chome
Chiyoda-ku Tokyo 100(JP)

(72) Inventor: Sato, Yoshinori
2-10-2 Ogawa
Machida-shi Tokyo(JP)

(74) Representative: Patentanwälte TER MEER - MÜLLER - STEINMEISTER
Mauerkircherstrasse 45
D-8000 München 80(DE)

# (54) Polyphenylene sulfide film for capacitor.

(57) Disclosed herein is a polyphenylene sulfide film for capacitor, comprising a biaxially oriented polyphenylene sulfide film containing not less than 70% by mole of repeating units

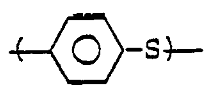

and from 0.1 to 5% by mole of trifunctional units enabling to bring molecular chains into branch, and having not more than -2 of an average gradient of the distribution curve showing the relation between X and log Y in the section of 0.1 to 0.4 $\mu m$ of the projection height wherein X represents a height of projections on said film ($\mu m$) and Y represents a number of projections per $mm^2$, not less than $100/mm^2$ of the number of the projections having a height of not less than 0.1 $\mu m$, and not more than $1,000/mm^2$ of the number of the projections having a height of not less than 0.4 $\mu m$.

EP 0 332 189 A2

# POLYPHENYLENE SULFIDE FILM FOR CAPACITOR

## BACKGROUND OF THE INVENTION:

The present invention relates to a polyphenylene sulfide film for a capacitor. More particularly, the present invention relates to a polyphenylene sulfide film for a capacitor which has good electrical properties, high heat resistance and excellent surface conditions and is also highly resistant to oxidation of the thin metal film deposited on the surface.

Attention is drawn recently to the capacitor which have been designed into chips for the purposes of miniaturization of capacitor, increase of capacity, miniaturization of circuits, improvement of mounting efficiency, etc. (such capacitor being hereinafter referred to as chip-capacitor). Such chip-capacitor, however, has its own problem; since the capacitor itself is placed on a solder bath of high temperature when adapted to a circuit, heat resistance of the capacitor film is deteriorated when using a conventional polyester film, polypropylene film, polystyrene film, polycarbonate film or like as dielectric member, resulting in a great reduction of static capacity or insulating resistance when mounted as a unit element.

There is now also known a capacitor using a film with high-degree heat resistance, such as poly-p-phenylene sulfide (PPS) film, polyimide film, aromatic polyamide film and the like as dielectric. Among them, most attention is focused on a capacitor using a biaxially oriented PPS film which has excellent electrical properties. Such biaxially oriented PPS film is not only excellent in electrical properties but also shows good frequency characteristic and temperature characteristic as well as high heat resistance. Application of such biaxially oriented PPS film as a dielectric member of a chip capacitor is proposed in Japanese Patent Application Laying-Open (KOKAI) No. 61-272917, etc.

However, in the production of such biaxially oriented PPS film or in practical use thereof, there often arise the following problems. Gases such as $SO_2$ are produced when PPS is heated to a high temperature, so that when it is melt extruded into a sheet, bubbles generate in the sheet, and in the succeeding sheet stretching step, such bubbles cause frequent rupture of the sheet to greatly reduce the productivity. Even if a stretched film could be produced, the fine bubbles left in the film may cause defective insulation in use as a capacitor. Also, the thin metal film formed by deposition or other means on the film surface may suffer from oxidative degradation due to the gas produced from PPS, resulting in intolerable deterioration of the quality.

Generally, a film capacitor is produced by the following process. A thin metal film which is to become electrode is formed by vacuum deposition or other means, on the surface of a film as dielectric, to form a metallized film, and this metallized film is made into a capacitor element by a suitable method such as winding, lamination, etc. The thus obtained element is further pressed and flattened, and the electrode out going lines are provided to both ends of the element to complete a capacitor.

It is desirable that the film be provided with a moderate degree of slipperiness during manufacturing steps. It is necessary that the film has good running property and won't cause zetting or unevenness of edge-face during the metal deposition step and winding step. Slipperiness of the film is also required for effecting uniform flatness of the element in the pressing step.

For improving film slipperiness, a method has been generally employed in which inorganic and/or organic fine particles are added into the film to roughen the film surface, and such method has been favorably used for forming polyester films. However, when using such film as dielectric element of a capacitor, the film surface is required to be flat for improving electrical properties, especially withstand voltage characteristic. Hitherto, in production of PPS film, no sufficient examination and studies have been made regarding said antinomic properties, and there is yet available no PPS film having excellent surface conditions and satisfying said both requirements at the same time.

In view of the problems, the present inventors have made eager studies on the subject matter and, as a result, it has been found that a biaxially oriented polyphenylene sulfide film containing a specified amount of trifunctional units in the polymer and having a plurality of projections of specified heights and a low number of coarse projections has the superior properties suited for use as a film for capacitor, and the present invention was attained on the basis of such finding.

## SUMMARY OF THE INVENTION:

In an aspect of the present invention, there is provided a polyphenylene sulfide film for capacitor comprising a biaxially oriented polyphenylene sulfide film containing not less than 70% by mole of recurring

units

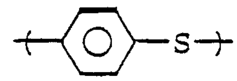

and from 0.1 to 5% by mole of trifunctional units enabling to bring molecular chain into branch, and having not more than -2 of an average gradient of the distribution curve showing the relation between X and log Y, in the range of 0.1 to 0.4 µm of the projection height, wherein X represents the height of projections on the film (µm) and Y represents the number of projections (per $mm^2$), not less than $100/mm^2$ of the number of projections having a height of not lower than 0.1 µm and not more than $1000/mm^2$ of the number of projections having a height of not lower than 0.4 µm.

## DETAILED DESCRIPTION OF THE INVENTION:

PPS compositions usable in the present invention are diversified, but from the viewpoint of heat resistance and mechanical strength, it is desirable that not less than 70% by mole, preferably not less than 80% by mole of p-phenylene sulfide units are contained in the composition.

It is also desirable that 0.1 to 5% by mole, preferably 0.2 to 3% by mole of trifunctional units which enable to bring polymer into branch are contained in the PPS composition. When the content of trifunctional units is less than 0.1% by mole, it is difficult to attain a high polymerization degree, while when said content exceeds 5% by mole, there takes place too much polymer branching or crosslinkage, thereby excessively reducing the fluidity of molten polymer, causing formation of a gel-like contaminant that deteriorates the flatness or evenness of the film. Typical examples of said trifunctional units are shown below.

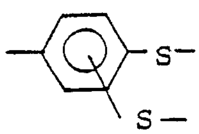

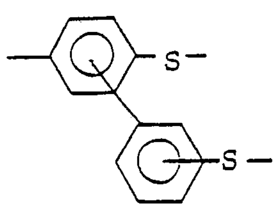

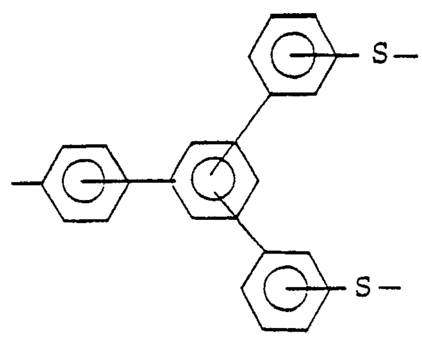

At least one type of these trifunctional units is contained in the composition. In the present invention,

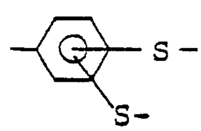

is advantageous in terms of reactivity and cost.

For obtaining a PPS composition containing the specified amount of said trifunctional units, there is a method of a copolymerization of the specified amounts of said trifunctional compounds with PPS-based polymer when producing PPS, or a method of dilution of PPS produced by copolymerizing the trifunctional compounds at a high concentration with a PPS-based polymer. In either method, it is desirable in the present invention that ultimately 0.1 to 5% by mole of trifunctional units be contained in the film composition.

Examples of the main compornent of the PPS compositions usable in the present invention are (1) PPS-based polymers, (2) PPS copolymers, (3) blends of PPS-based polymers and PPS copolymers, and (4) blends of polymers having m-phenylene sulfide units as main repeating units and (1) PPS-based polymers or (2) PPS copolymers.

The term "PPS-based polymers" used in the present invention means polyphenylene sulfides containing not less than 90% by mole of p-phenylene sulfide units. Also, the term "PPS copolymers" used in the present invention means poly-p-phenylene sulfides in which part of the repeating units is substituted with, for instance,

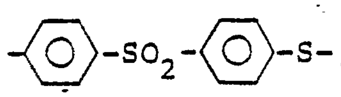, 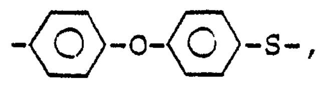, 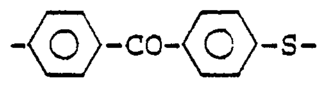,

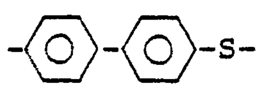, 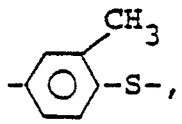, 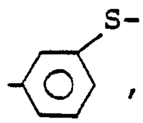, 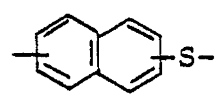 or 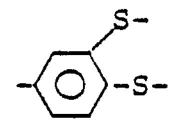.

Among them, the most preferably used in the present invention are the PPS-based polymers for their especially excellent heat resistance and the blends of PPS-based polymers and PPS copolymers as such blends are capable of improving film forming properties while maintaining heat resistance.

A typical example of such blends is a polyphenylene sulfide containing preferably less than 20% by mole, more preferably 2 to 10% by mole of m-phenylene sulfide units obtained by blending the following two types of polyphenylene sulfide (i) and (ii):

(i) polyphenylene sulfide containing not less than l5% by mole of m-phenylene sulfide units;

(ii) polyphenylene sulfide containing not less than 95% by mole of p-phenylene sulfide units.

The capacitor film according to the present invention is usually produced as a thin film having a thickness not more than 5 µm, so that the film material is required to have excellent film forming properties. For this reason, a blend of (i) and (ii) mentioned above is preferably used, but it is possible to use other PPS compositions so far as the purport of the present invention is not impaired.

The following method can be favorably used for the preparation of PPS used in the invention.

An alkali sulfide, especially sodium sulfide, and a corresponding dihalobenzene (such as p-dichlorobenzene) and if necessary a halogen-substituted monomer capable of forming other recurring units are reacted under a high-temperature and high-pressure conditions in an amide-type polar organic solvent such as N-methylpyrrolidone in the presence of a polymerization aid. For containing the trifunctional units in the composition, a corresponding trifunctional compound (such as 1,2,4-trichlorobenzene) is added as a kind of said halogen-substituted monomer and then reacted.

It has been found that when polymerization is carried out by said method without adding the trifunctional compound , it is hard to attain conversion into a polymer having high molecular weight, and for producing a polymer having a viscosity suited for forming a film, it is inevitable to use a thickening method in which crosslinkage is effected by heating. Crosslinkage by heating generates gases such as $SO_2$, and such gases remain in the system to cause trouble in the succeeding steps. In case of using the trifunctional compound as in the present invention, there is no need of using such thickening method and it is possible to obtain a polymer having a viscosity suitable for forming a film. The "viscosity suitable for forming a film" in the present invention is in the range from 500 to 200,000 poises at shear rate of 200 $sec^{-1}$, as measured as melt viscosity at 300 °C.

In the present invention, it is possible to blend other polymers (such as polyester, polyamide, polyethylene, polypropylene, polystyrene, polycarbonate, polysulfone, polyimide, etc.) and/or additives such as antioxidant, heat stabilizer, lubricant, etc., as occasion demands, in an amount of up to about 10% by weight based on the total amount of PPS for film forming.

The process for producing a film by using such PPS will be described below.

According to the present invention, PPS composition is supplied into a known melt extruder and heated to a temperature higher than the melting point of said composition. Then the molten PPS composition is extruded from a slit die onto a rotating cooling-drum whereby the PPS composition is rapidly cooled and solidified so that a temperature thereof is below the glass transition temperature, whereby a substantially amorphous non-oriented sheet is formed. In this case, in order to improve flatness of the sheet, it is necessary to enhance adhesion between sheet and rotating cooling-drum. For this purpose, an electrostatic cooling method and/or a liquid spraying method is preferably employed in the present invention.

In the electrostatic cooling method, a linear electrode is extended in the direction transversal to the sheet flow, usually on the upper side of the sheet, and a DC voltage of about 5 to 10 KV is applied to said electrode to give electrostatic charges to the sheet, thereby enhancing adhesion of the sheet to the drum. According to the liquid spraying method, a liquid is applied uniformly over the entirety or a part (for

example, the portions contacting with both edges of the sheet) of the cooling-drum surface, thereby enhancing adhesion between sheet and drum surface. In the present invention, if necessary, both of said methods may be employed at the same time.

In the present invention, the thus obtained sheet is biaxially stretched to form a film. Such stretching can be accomplished by known methods, such as stretching method which makes use of difference in peripheral speed between rolls, tenter method and tubular method.

The stretching conditions are more definitely described below. The non-stretched sheet is first stretched 2 to 5 times in one direction at a temperature of preferably 70 to 120 °C, more preferably 80 to 105 °C by a roll or tenter type stretching machine. Then the sheet is further stretched 1.5 to 6 times in the direction transversal to the initial stretching direction at a temperature of preferably 70 to 140 °C, more preferably 80 to 120 °C to obtain a biaxially oriented film.

The thus obtained biaxially stretched film is preferably subjected to heat treatment for improving mostly dimensional stability. If necessary, before or after such heat treatment, the sheet may be re-stretched longitudinally and/or transversely to increase the degree of orientation, thereby further improving mechanical strength of the film.

Proper selection of said means and methods allow production of a biaxially oriented film, but it is also an equally important feature of the present invention that the surface conditions of the obtained film can meet the specific requirements.

Namely, when the projection height on the film is denoted as X (μm) and the number of the projections (per $mm^2$) is denoted as Y (number/$mm^2$), then the average gradient, in the projection height of 0.1 to 0.4 μm, of the distribution curve showing the relation between X and log Y is not more than -2, and that the number of the projections having a height of not lower than 0.1 μm is not less than 100 per $mm^2$ and the number of the projections having a height of not lower than 0.4 μm is not more than 1,000 per $mm^2$.

Hitherto, "center line average roughness" (Ra) has been known as a means for indication of film surface roughness. It has been found, however, that it is impossible with such indication by "Ra" to precisely reflect the necessary film properties, and revealed the fact that there exists a good interrelation between the distribution curve which indicates the relation between projection height on film and number of projections, and the number of the projections of specific heights. Thus, it is one of the essential requirements for obtaining an excellent PPS film for capacitor to keep said distribution curve within a range of specific conditions and to markedly reduce the number of coarse projections. The reason for such fact is not definitely known, but it appears that the distributing condition of fine projections on the film surface is an important factor regarding slipperiness of PPS film and workability in the production of capacitors, while the number of coarse projections on film surface has an important bearing on the electrical properties such as dielectric properties of capacitors using said film. In the light of these facts, it is considered that said distribution curve indicating the relation between projection height and projection number and the number of coarse projections can more accurately express the film properties than possible with "Ra" which gives little information regarding the height of projections.

In the present invention, therefore, when the projection height on the film is denoted as X (μm) and the number of projections is denoted as Y (per $mm^2$), the average gradient of the distribution curve expressing the relation between X and log Y, in the range of 0.1 to 0.4 μm of the projection height, needs to be not more than -2, preferably not more than -2.5. It is thus preferable that the distribution curve is sharp. If the gradient is more than -2, namely if the distribution curve is not sharp, there will appear an excessively large number of coarse projections causative of deterioration of electrical properties of the film when there are given a required number of projections for improving film slipperiness.

In the film of the present invention, it is essential that the number of the projections having a height of not lower than 0.1 μm is not less than 100 per $mm^2$, preferably not less than 200 per $mm^2$. When the number of such projections is less than 100 per $mm^2$, the film slipperiness deteriorates. In the present invention, it is also imperative that the number of projections having a height of not lower than 0.4 μm is not more than 1,000 per $mm^2$, preferably not more than 700 per $mm^2$. When the number of such projections exceeds 1,000 per $mm^2$, although film slipperiness is somewhat improved, the electrical properties such as dielectric breakdown voltage are badly worsened.

The film of the present invention can be obtained according to the film forming process described before. In order to acquire the described surface features of the film of the present invention, a method is preferably employed in which inorganic and/or organic fine particles are contained in the composition at any proper step in the polymer production step to film forming step. As an inorganic particles usable in the present invention, of talc, kaolin, calcium carbonate, calcium phosphate, lithium fluoride, titanium dioxide,silicon dioxide,carbon black, zeolite and the like may be exemplified. As an organic particles usable in the present invention, crosslinked polymers, calcium oxalate, calcium terephthalate and the like may be

exemplified.

The preferred size and content of these particles are variable depending on various factors such as particle shape, affinity of particles for PPS, film stretching conditions, etc., but usually it is preferable to use the particles having an average diameter in the range of 0.01 to 2 µm, more preferably 0.1 to 1.5 µm. Generally, use of particles having a sharp diameter distribution is preferred. The ratio of the particles to PPS in the blend is usually selected from within the range of 0.01 to 5% by weight, preferably 0.05 to 1.5% by weight.

It has been further found that among the biaxially oriented PPS films obtainable according to the present invention, those having a retention of surface area of not less than 80%, preferably not less than 90% after 10-second dipping in a 250 °C solder bath are notably improved in heat resistance and best suited for application to capacitors.

Particularly in application to chip capacitors, since the capacitor is exposed to a high-temperature atmosphere with solder bath when fitted to a circuit, the film used as dielectric is also required to have a high-degree heat resistance. When the film of the present invention having good dimensional stability after a solder bath treatment is used as the dielectric film, it is possible to prevent deterioration of electrical properties such as electrostatic capacity, dielectric strength, etc., after practical adaptation. In order to secure not less than 80% retention of surface area of a biaxially oriented PPS film after 10-second dipping in a 250 °C solder bath, the following methods may be favorably used.

In the film forming process, (i) the biaxially stretched film is subjected to heat treatment at a temperature of not less than 250 °C to below the melting point of the polymer under a limited shrinkage or elongation of not more than 20%, or under a fixed length; or (ii) the biaxially stretched film is subjected to heat treatment in two or more stages, in which at least one stage is conducted at a temperature of not less than 250 °C to below the melting point of the polymer.

As described above, the biaxially oriented polyphenylene sulfide film obtained by using the starting materials satisfying the specific conditions, having a specific surface profile according to the present invention has excellent electrical properties, heat resistance and slipperiness and also won't cause oxidation of the thin metallic film deposited on the film surface, so that said film of the present invention finds particularly useful application to capacitors.

In other words, the polyphenylene sulfide film of the present invention has excellent heat resistance, electrical properties and handling qualities for application to capacitors. The polyphenylene sulfide film according to the present invention suffers little quality degradation due to generation of gases such as $SO_2$ and has high reliability. Thus, the industrial value of this film is high.

The present invention is explained in more detail in the following Examples; however, it should be recognized that the scope of the present invention is not restricted to these Examples.

## EXAMPLES

In the examples, the determinations and definitions of various properties and characteristics were made as described below.

### (1) Melt viscosity

Measured by using a Koka type flowtester with a nozzle of 1 mm of diameter and 10 mm of length at 300 °C and a shear rate of 200 $sec^{-1}$.

### (2) Distribution curve and number of projections with heights from 0.1 to 0.4 µm

The height and number of the projections were measured by using a three-dimensional surface roughness meter SE-3AK (manufactured by KOSAKA KENKYUSHO) under the following conditions:
End radius of feeler = 5 µm,
needle pressure = 30 mg,
measured length = 0.5 mm,
sampling pitch = 1.0 µm,
cutoff = 0.25 mm,
vertical magnification = X20,000,

horizontal magnification = X200,
number of scanning lines = 500.

In measuring the height (X µm) of projections, the height at the point where the number of projections was maximized, was supposed to be 0 level and the height from this level was given as the height of projection. The relation in the number (Y per $mm^2$) of projections of the respective heights was diagrammatized and expressed as a distribution curve.

The number of projections having heights not less than 0.1 µm and the number of those having heights not less than 0.4 µm were measured by the above-described method.

Measurement was made at 3 points in the longitudinal direction of the film and at 3 points in the direction vertical thereto, and the average of the measurements at 6 points was shown as measured value.

(3) Coefficient of friction

Measured according to the method of ASTM D-1894.

(4) Dielectric breakdown voltage

Measured according to the method of JIS C-2319.

(5) Solder bath resistance of film

Sample film was cut to a 20 mm x 20 mm square piece and dipped in a 250 °C solder bath for 10 seconds. After dipping, the size (a mm x b mm) of the film was measured and the retention of surface area was calculated from the following formula:

$$\text{Retention of surface area (\%)} = \frac{a \times b}{20 \times 20} \times 100$$

Measurement was made at 5 times, and the average of the 5-times measurements was shown as measured value.

(6) Evaluation of oxidized state of deposited metal

Aluminum was vacuum deposited on the surface on one side of the film to a thickness of about 200 Å, and the metallized film was heat-treated at 100 °C for 170 hours. Then the state of oxidation on the contact side of aluminum deposit with PPS film was observed from the aluminum non-deposited side and rated according to the following 5-rank criterion.

1: Substantially the whole area was oxidized.
2: More than 50% of area was oxidized.
3: 10 to 50% of area was oxidized.
4: A portion less than 10% of the area was oxidized.
5: No oxidization was seen.

(7) Soldering heat resistance of capacitor

The capacity of the capacitor and dielectric dissipation factor (tan $\delta$) were measured under the conditions of 25 °C and 1 KHz. This capacitor was dipped in a 250 °C solder bath for 10 seconds and then the rate of change of capacity and the rate of change of tan $\delta$ were determined according to the following formulae:

Rate of change of capacity (%) = 100(C - Co)/Co
Co: initial capacity
C: capacity after dipping in solder bath
Rate of change of tan $\delta$ (%) = 100(tan $\delta_2$ - tan $\delta_1$)/tan $\delta_1$
tan $\delta_1$: initial dielectric dissipation factor
tan $\delta_2$: dielectric dissipation factor after dipping in solder bath

Example 1

(Preparation of polyphenylene sulfide)

By using m-dichlorobenzene, p-dichlorobenzene, 1,2,4-trichlorobenzene and sodium sulfide nonahydrate as starting materials, a polyphenylene sulfide block copolymer (A) containing 60 mol% of m-phenylene sulfide units in blockwise and 0.6 mol% of trifunctional units was produced. This polymer had a melt viscosity of 2,200 poises.

Then, by using p-dichlorobenzene, 1,2,4-trichlorobenzene and sodium sulfide nonahydrate as starting materials, a poly-p-phenylene sulfide (B) containing 0.6 mol% of trifunctional units was produced. This polymer had a melt viscosity of 4,000 poises.

8 parts of polymer (A), 92 parts of polymer (B) and 0.3 part of titanium oxide having an average particle size of 0.3 µm were blended to prepare a film forming composition.

(Preparation of polyphenylene sulfide film)

The composition obtained in the manner described above was sufficiently kneaded at 300 °C in an extruder and extruded into a sheet-like form from a die having a width of 300 mm and a gapping of 0.8 mm. The thus obtained sheet-like form was quickly cooled and solidified onto a rotating cooling drum having its surface temperature set at 40 °C by utilizing the electrostatic cooling method to obtain a substantially amorphous sheet having a thickness of 30 µm.

This sheet was stretched 3.7 times in the longitudinal direction at 93 °C, further stretched 4.0 times in the transversal direction at 100 °C and then subjected to a heat treatment at 270 °C for 10 seconds to obtain a biaxially oriented film having a thickness of 2 µm.

The properties of the obtained film are shown in Table 1.

(Preparation of capacitor)

Aluminum was vacuum deposited on one side of the thus obtained film. Deposition was conducted in a stripped pattern of 10 mm wide deposited portion and 2 mm wide non-deposited portion by using a tape margin method. Each of the deposited portion and the non-deposited portion of said deposited film was slit at each center line in longitudinal direction of the deposited film to obtain a 6 mm wide slit film having 1 mm wide margins. This slit film was wound back so that the respective margins were located on the opposite side and then pressed to flatten the hollow portion (non-deposited portion), followed by metal spray to both edges by a usual method. On the metal-sprayed edges of this element were mounted metal caps to serve as electrode outgoing lines, thereby forming a capacitor.

The results of determination of properties of this capacitor are shown in Table 1.

Example 2

By following the same procedure as the preparation of polymer (A) used in Example 1, a polyphenylene sulfide block copolymer (C) containing 60 mol% of m-phenylene sulfide units in a blockwise and 0.8 mol% of trifunctional units was produced. This polymer had a melt viscosity of 2,400 poises. Also, by following the preparation procedure of polymer (B) of Example 1, a poly-p-phenylene sulfide (D) containing 0.8 mol% of trifunctional units was produced. This polymer had a melt viscosity of 3,500 poises.

8 parts of polymer (C), 92 parts of polymer (D) and 0.1 part of silica particles having an average diameter of 0.9 µm were blended to prepare a film forming composition, and this composition was subjected to the same film forming operations as in Example 1 to produce a biaxially oriented film having a thickness of 2 µm. Also, a capacitor was made by using this film.

Example 3

To 100 parts of polymer (B) of Example 1 was blended 0.3 part of titanium oxide having an average

particle diameter of 0.3 µm to prepare a film forming composition, and the thus obtained film form composition was subjected to the same film forming operations as in Example 1 to produce a biaxially oriented film having a thickness of 2 µm. A capacitor was also similarly made by using this film.

The films obtained in Examples 1, 2 and 3, which satisfied the preparation conditions of the present invention, had good film forming properties, and it was possible to. produce the extremely thin films, 2 µm in thickness, without trouble. Also, because of excellent slipperiness, the films of the present invention were easy to handle in both film forming process and in production of capacitor. Further, since deposited aluminum wouldn't be oxidized and had excellent solder bath resistance, the capacitor using said film as dielectric member was little changed in properties when dipped in a solder bath and suffered no quality degradation even after long-time use.

Comparative Example 1

A polymer was produced in the same way as in Example 1 except that the amount of 1,2,4-trichlorobenzene used for polymerization was 0.01 mol%. Since the molecular weight didn't increase and the melt viscosity was less than 500 poises in both cases of poly-p-phenylene sulfide and block copolymer, the amorphous sheet obtained by using the thus obtained polymers were very frail and could not be stretched. Then the polymers were thickened by a heat treatment at 250 °C in the presence of oxygen to obtain a poly-p-phenylene sulfide having a melt viscosity of 3,500 poises and a block copolymer having a melt viscosity of 3,200 poises. By following the same process as Example 1 except for use of said polymers as starting material, a biaxially oriented film having a thickness of 2 µm was produced.

This film had many contaminants considered to arise from the gelatized product formed in the heat thickening step of the polymer, and the number of large projections greater than 0.4 µm on the surface has increased. Therefore, this film was impaired in flatness required for obtaining a high-quality capacitor. It also has dropped in dielectric breakdown voltage and was unsuited for use as a dielectric for capacitor. Further, the result of evaluation relating to oxidation of deposited aluminum was bad, and the capacitor made by using this film showed a notable degradation of quality after long-time use.

Comparative Example 2

A 2 µm thick biaxially oriented film was obtained by following the same procedure as Example 1 except for non-blending of the particles such as titanium oxide particles used in Example 1. The surface state of this film failed to meet the conditions of the present invention. Namely, in this film, the number of surface projections weigh heights not less than 0.1 µm was less than 100 per $mm^2$, so that this film was extremely poor in slipperiness and also very bad in handling characteristics in both film producing and capacitor making operations.

Comparative Example 3

A 2 µm thick biaxially oriented film was produced by the same process as Example 1 except that silica particles having an average diameter of 1.8 µm were blended in a concentration of 0.5% by weight in place of titanium oxide particles used in Example 1. In the case of this film, the particles blended were large in diameter, the gradient of the projection distribution curve of said film was not steep and also the number of the projections not less than 0.4 µm in height increased excessively, so that this film was reduced in dielectric breakdown voltage and unsuited for use as a dielectric for capacitor.

Comparative Example 4

A 2 µm thick biaxially oriented film was obtained in the same manner as Example 1 except that the heat treatment after biaxial stretching in the film forming operations was conducted at 210 °C. Solder bath resistance, in other words, retention of surface area of this film after dipping in a solder bath was 55%, indicating very poor thermal dimensional stability. Accordingly, the capacitor made by using this film as dielectric was poor in heat resistance, and the result of a solder heat resistance test showed a large rate of change of properties and inability of capacitor to stand soldering at the step of incorporating the product as

chip capacitor in a circuit.

Comparative Example 5

A polymer was produced in the same way as Example 1 except that the amount of 1,2,4-trichlorobenzene used for polymerization was 10 mol%. The obtained polymer had a melt viscosity higher than 300,000 poises and was very poor in fluidity when melted, so that it was impossible to obtain an amorphous sheet with a uniform thickness, and also rupture occurred frequently when stretched. Further, the polymer had a large amount of contaminant supposed to be a gelation product. Because of such very poor polymer quality, it was impossible to obtain a desired biaxially oriented film.

Table 1

| | | | Example 1 | Example 2 | Example 3 | Comp. Example 1 | Comp. Example 2 | Comp. Example 3 | Comp. Example 4 |
|---|---|---|---|---|---|---|---|---|---|
| Polyphenylene sulfide | Particles contained | Kind | Titanium oxide | Silica particles | Titanium oxide | Titanium oxide | None | Silica particles | Titanium oxide |
| | | Average diameter (μm) | 0.3 | 0.9 | 0.3 | 0.3 | - | 1.8 | 0.3 |
| | | Concentration (wt%) | 0.3 | 0.1 | 0.3 | 0.3 | - | 0.5 | 0.3 |
| | Content of trifunctional units (mol%) | | 0.6 | 0.8 | 0.6 | 0.01 | 0.6 | 0.6 | 0.6 |
| Film properties | Surface state (projection distribution curve) | Average gradient | <-2 | < -2 | <-2 | > -2 | < -2 | > -2 | < -2 |
| | | Nr. of projections with heights above 0.1 μm (per $mm^2$) | 500 | 700 | 500 | 2500 | 15 | 3000 | 550 |
| | | Nr. of projections with heights above 0.4 μm (per $mm^2$) | 40 | 80 | 50 | 1100 | 1 | 1200 | 50 |
| | Coefficient of friction | | 0.70 | 0.50 | 0.70 | 0.45 | 3.5 | 0.30 | 0.75 |
| | Dielectric breakdown voltage (V) | | 640 | 600 | 620 | 500 | 620 | 460 | 620 |
| | Solder bath resistance (retention of area, %) | | 93 | 92 | 95 | 92 | 92 | 90 | 55 |
| | Evaluation of oxidation of aluminum deposit | | 5 | 5 | 5 | 3 | 5 | 5 | 5 |
| Capacitor properties | Change of rate of capacity (%) | | -0.5 | -0.5 | -0.4 | -0.7 | -0.5 | -0.5 | -20 |
| | Change of rate of tan δ(%) | | 0 | 0 | 0 | 0 | 0 | 0 | 5 |

## Claims

1. A polyphenylene sulfide film for capacitor, comprising a biaxially oriented polyphenylene sulfide film containing not less than 70% by mole of repeating units

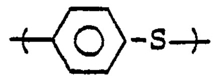

and from 0.1 to 5% by mole of trifunctional units enabling to bring molecular chains into branch, and having not more than -2 of an average gradient of the distribution curve showing the relation between X and log Y in the section of 0.1 to 0.4 µm of the projection height wherein X represents a height of projections on said film (µm) and Y represents a number of projections per $mm^2$, not less than $100/mm^2$ of the number of the projections having a height of not lower than 0.1 µm, and not morethan $1,000/mm^2$ of the number of the projections having a height of not lower than 0.4 µm.

2. A polyphenylene sulfide film for capacitor according to claim 1, whcrein area retention ratio after dipping in a solder bath of 250° C for 10 seconds is not less than 80%.

3. A polyphenylene sulfide film for capacitor according to claim 1, wherein said trifunctional units are represented by the following formulae:

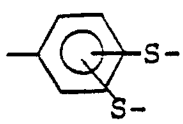 , 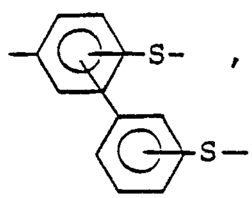 , 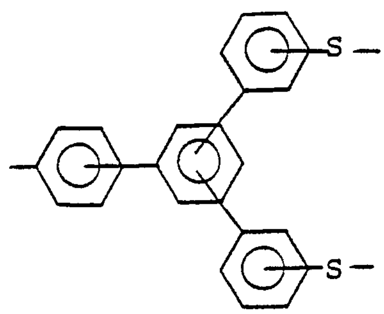

4. A polyphenylene sulfide film for capacitor according to claim 1, wherein not less than 70% by mole of said repeating units

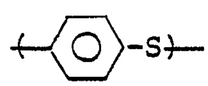

of said biaxially oriented polyphenylene sulfide film are derived from (1) a polyphenylene sulfide -based polymer or (2) a blend of a polyphenylene sulfide containing m-phenylene sulfide units as main repeating units and the polyphenylene sulfide -based polymer or a polyphenylene sulfide copolymer.

5. A polyphenylene sulfide film for capacitor according to claim 1, wherein a polyphenylene sulfide composition of said biaxially oriented polyphenylene sulfide film contains 0.01 to 5% by weight of an in organic fine particle of average diameter in the range of 0.01 to 2 µm, an organic fine particle of average diameter in the range of 0.01 to. 2 µm or a mixture thereof.

6. A polyphenylene sulfide for capacitor according to claim 1, which has not less than 80% of a retention of surface area after 10-second dipping in a 250° C solder bath.

7. A capacitor comprising a metalized film of the polyphenylene sulfide film according to claim 1.